# EUROPEAN PATENT APPLICATION

(11) **EP 4 418 172 A1**
(43) Date of publication of application: **21.08.2024**
(21) Application number: 22881038.8
(22) Date of filing: 12.10.2022
(51) Int. Cl.: G06Q 10/04, E02B 1/00, G05B 23/02, G06Q 50/26

(54) **ESTIMATION MODEL ACQUIRING DEVICE, RIVER FLOW RATE ESTIMATING DEVICE, ESTIMATION MODEL PRODUCTION METHOD, RIVER FLOW RATE ESTIMATING METHOD, AND PROGRAM**

(30) Priority: 12.10.2021 JP 2021167230
(71) Applicant: Suntory Holdings Limited, Kita-ku, Osaka-shi Osaka 530-8203 (JP)
(72) Inventor: GOTO Nozomi, Kyoto 6190284 (JP); YANO Shinjiro, Hokuto City, Yamanashi 4080316 (JP); KUDO Keishi, Tokyo 1690074 (JP); ARAI Kaori, Tokyo 1690074 (JP)
(74) Representative: Vossius & Partner Patentanwälte Rechtsanwälte mbB
(86) International application number: PCT/JP2022/038011
(87) International publication number: WO 2023/063343

(57) **Abstract**

Conventional estimation model generating apparatuses are required to be able to estimate information on a flow rate of a target river. An estimation model generating apparatus 101 includes: a basin data acquiring unit 142 that acquires basin data of a basin of a river of interest from an image containing the basin; a candidate model acquiring unit 143 that acquires one or more candidate models for estimating information on a flow rate of the river based on the basin data; a verifying unit 145 that verifies validity of at least one candidate model out of the one or more candidate models using verification data; an estimation model acquiring unit 147 that acquires one candidate model out of the one or more candidate models as an estimation model based on a verification result; and a model accumulating unit 149 that accumulates the acquired estimation mode. Accordingly, it is possible to estimate information on a flow rate of a target river.

## Description

### Technical Field

The present invention relates to an estimation model acquiring apparatus for acquiring an estimation model for estimating the flow rate of a river, a river flow rate estimating apparatus, a method for producing an estimation model, a river flow rate estimating method, and a program.

### Background Art

There is a need to grasp information on the flow rate of rivers for a variety of purposes. For example, in recent years, with the growing awareness of sustainable use of water resources, information on the flow rate of rivers is necessary to properly grasp and analyze information on water resources.

As for methods for obtaining information on the flow rate of rivers, for example, Patent Document 1 below describes calculating a basin gradient from an elevation and an area obtained from commercially available topographic maps, generating a regression formula for a gradient and a flow rate, and obtaining a regression function for estimating the flow rate of a mountain river basin whose flow rate has not been measured.

Also, Patent Document 2 below describes calculating a vegetation index (NDVI) from satellite data to determine the soil moisture content distribution and to assist in determining the borehole location for groundwater exploration.

Also, Non-Patent Document 1 below describes a rainfall runoff inundation model (RRI model) for performing integrated analysis on rainfall runoff and flood inundation using rainfall data.

### Citation List

### Patent Documents

Patent Document 1: Japanese Patent No. 5899598
Patent Document 2: Japanese Patent No. 3533524

### Non-Patent Document

Non-Patent Document 1: The National Research and Development Agency Public Works Research Institute ICHARM, "rainfall runoff inundation model (RRI model)", [online], [retrieved July 6, 2021], Internet <URL: https://www.pwri.go.jp/icharm/research/rri/index_j.html>

### Summary of Invention

### Technical Problem

Conventionally, in order to properly grasp information on the flow rate of rivers, it has been necessary to visit the site (the basin of a target river of interest) and measure the flow rate and the like. However, such field survey of the flow rate and the like requires various costs. That is to say, there is a need to be able to estimate information on the flow rate of a target river.

Although the method described in Patent Document 1 above can estimate the flow rate using a regression function, a different method is also needed.

It is an object of the present invention to provide an estimation model acquiring apparatus, a river flow rate estimating apparatus, a method for producing an estimation model, a river flow rate estimating method, and a program, which are useful to estimate information on the flow rate of a target river.

### Solution to Problem

A first aspect of the present invention is directed to an estimation model generating apparatus including: a basin data acquiring unit that acquires basin data of a basin of a river of interest from an image containing the basin; a candidate model acquiring unit that acquires one or more candidate models for estimating information on a flow rate of the river based on the basin data; a verifying unit that verifies validity of at least one candidate model out of the one or more candidate models using verification data; an estimation model acquiring unit that acquires one candidate model out of the one or more candidate models as an estimation model based on a verification result; and a model accumulating unit that accumulates the acquired estimation model.

With this configuration, it is possible to generate an estimation model capable of estimating information on the flow rate of a target river.

Furthermore, a second aspect of the present invention is directed to the estimation model generating apparatus according to the first aspect, in which the verifying unit performs verification of the candidate model, using information on a flow rate obtained using the candidate model that is to be verified, and information obtained by applying a value of a parameter corresponding to the basin data to one or more predetermined formulas regarding a flow rate of a river.

With this configuration, it is possible to generate an estimation model capable of accurately estimating information on the flow rate of a target river, using information that can be acquired even from a remote location.

Furthermore, a third aspect of the present invention is directed to the estimation model generating apparatus according to the second aspect, in which the one or more predetermined formulas include at least one of a uniform flow formula representing a relationship between a water level and a flow rate and a rational formula representing a peak flow rate.

With this configuration, it is possible to generate an estimation model capable of accurately estimating information on the flow rate of a target river.

Furthermore, a fourth aspect of the present invention is directed to the estimation model generating apparatus according to the third aspect, in which the verifying unit performs verification of the candidate model, using information on a flow rate obtained using the candidate model that is to be verified, information obtained by applying a value of a parameter corresponding to the basin data to the uniform flow formula, and information obtained by applying a value of a parameter corresponding to the basin data to the rational formula.

With this configuration, it is possible to generate an estimation model capable of more accurately estimating information on the flow rate of a target river.

Furthermore, a fifth aspect of the present invention is directed to the estimation model generating apparatus according to any one of the first to fourth aspects, further including an existing data acquiring unit that acquires information on a flow rate of the river from a hydrological database, in which the verifying unit performs verification of the candidate model, using at least information acquired by the existing data acquiring unit and information on a flow rate obtained using the candidate model that is to be verified.

With this configuration, it is possible to generate an estimation model capable of accurately estimating information on the flow rate of a target river, using information that can be acquired even from a remote location.

Furthermore, a sixth aspect of the present invention is directed to the estimation model generating apparatus according to the fifth aspect, in which the existing data acquiring unit acquires a lowest flow rate of the river from a hydrological database, and the verifying unit performs verification of the candidate model, using a base flow rate obtained using the candidate model that is to be verified and the lowest flow rate acquired by the existing data acquiring unit.

With this configuration, it is possible to generate an estimation model capable of accurately estimating information on the flow rate of a target river.

Furthermore, a seventh aspect of the present invention is directed to the estimation model generating apparatus according to any one of the first to sixth aspects, which is configured to repeat acquisition of one or more candidate models by the candidate model acquiring unit and verification regarding the one or more candidate models by the verifying unit, until the estimation model acquiring unit determines that a verification result satisfies a predetermined condition.

With this configuration, it is easy to generate an estimation model capable of estimating information on the flow rate of a target river, with a certain level of accuracy.

Furthermore, an eighth aspect of the present invention is directed to the estimation model generating apparatus according to any one of the first to seventh aspects, in which the estimation model is a rainfall runoff inundation model, and the basin data includes land use data.

With this configuration, it is possible to generate an estimation model capable of more accurately estimating information on the flow rate of a target river.

Furthermore, a ninth aspect of the present invention is directed to the estimation model generating apparatus according to any one of the first to eighth aspects, further including an image acquiring unit that acquires an image to be used, based on positional information indicating the basin of the river of interest, in which the basin data acquiring unit acquires basin data of the basin from the acquired image.

With this configuration, it is easy to accurately estimate information on the flow rate of a target river.

Furthermore, a tenth aspect of the present invention is directed to a river flow rate estimating apparatus including: the estimation model generating apparatus according to any one of the first to ninth aspects; a flow rate information acquiring unit that acquires information on a flow rate of a river of interest, using the estimation model accumulated by the model accumulating unit; and a flow rate information output unit that outputs the information on the flow rate.

With this configuration, it is possible to estimate information on the flow rate of a target river.

Furthermore, an eleventh aspect of the present invention is directed to the river flow rate estimating apparatus according to the tenth aspect, further including a weather data acquiring unit that acquires weather data of the basin of the river of interest, in which the flow rate information acquiring unit acquires the information on the flow rate by applying the weather data to the estimation model.

With this configuration, it is possible to estimate information on the flow rate of a target river.

Furthermore, a twelfth aspect of the present invention is directed to the river flow rate estimating apparatus according to the tenth or eleventh aspect, in which the flow rate information acquiring unit acquires, through calculation, a specific flow rate of each pre-divided area in the basin, using a result output by using the estimation model.

With this configuration, it is possible to estimate the specific flow rate of each basin.

Furthermore, a thirteenth aspect of the present invention is directed to the river flow rate estimating apparatus according to the twelfth aspect, further including: a recharge area information acquiring unit that acquires information on an area that satisfies a predetermined recharge condition, using the specific flow rate of each basin; and a recharge area information output unit that outputs the information on the area.

With this configuration, it is possible to output information on an area that satisfies a recharge condition.

### Advantageous Effects of Invention

According to the present invention, it is possible to provide an estimation model acquiring apparatus, a river flow rate estimating apparatus, a method for producing an estimation model, a river flow rate estimating method, and a program, which are useful to estimate information on the flow rate of a target river.

### Brief Description of Drawings

FIG. 1 is a diagram illustrating the application of a river flow rate estimating apparatus according to an embodiment.
FIG. 2 is a diagram illustrating an example of an estimation model that is used in the river flow rate estimating apparatus in the embodiment.
FIG. 3 is a block diagram of the river flow rate estimating apparatus in this embodiment.
FIG. 4 is a flowchart illustrating the use of the river flow rate estimating apparatus in the embodiment.
FIG. 5 is a flowchart showing an example of estimation model generation processing by the river flow rate estimating apparatus in the embodiment.
FIG. 6 is a flowchart showing an example of verification processing using a verification formula by a verifying unit in the embodiment.
FIG. 7 is a first diagram illustrating verification using a verification formula performed by the verifying unit in the embodiment.
FIG. 8 is a second diagram illustrating verification using a verification formula performed by the verifying unit in the embodiment.
FIG. 9 is a diagram illustrating verification using existing data performed by the verifying unit in the embodiment.
FIG. 10 is a flowchart showing a modified example of the estimation model generation processing by the river flow rate estimating apparatus in the embodiment.
FIG. 11 is a flowchart showing an example of verification processing by the verifying unit in the embodiment.
FIG. 12 is a schematic view of a computer system in the embodiment.
FIG. 13 is a block diagram of the computer system in the embodiment.

### Description of Embodiment

Hereinafter, an embodiment of an estimation model acquiring apparatus, a river flow rate estimating apparatus including the same, and the like will be described with reference to the drawings. The constituent elements denoted by the same reference numerals in the embodiments perform similar operations, and thus a description thereof may not be repeated.

The terms used below are generally defined as follows. The meanings of these terms do not always have to be interpreted as indicated herein, and have to be interpreted in light of individual explanations below, if any, for example.

"Identifier of a certain item" is a character, a code, or the like that uniquely indicates the item. Examples of codes include, but are not limited to, alphanumeric characters and other symbols. An identifier is, for example, a code string that itself does not indicate a specific meaning, but any type of information may be used as long as it can identify a corresponding item. That is to say, an identifier may be the exact name of what it indicates, or a combination of codes uniquely corresponding to what it indicates. A combination of two or more pieces of information (e.g., attribute values of records recorded in a database) may be used as an identifier.

"Acquiring" may include acquiring an item that is input by a user or the like, or acquiring information stored in the apparatus or another apparatus (the information may be information stored in advance or information generated through information processing in the apparatus). "Acquiring information stored in another apparatus" may include acquiring information stored in the other apparatus via an API or the like, or acquiring the content of a document file (including the webpage content, etc.) provided by the other apparatus.

Furthermore, a so-called machine learning method may be used to acquire information. A machine learning method may be used as follows, for example. That is to say, learning information in which a particular type of input information is taken as input and a type of output information that is to be acquired is taken as output is configured using a machine learning method. For example, two or more pairs of input information and output information are prepared in advance, the two or more pairs of information are given to a module for configuring learning information of machine learning to configure learning information, and the configured learning information is accumulated in a storage unit. The learning information may also be said to be a learning model or a classifier. There is no limitation on the machine learning method, and examples thereof include deep learning, random forests, and SVR. For example, functions in various machine learning frameworks and various existing libraries, such as fastText, tinySVM, random forest, and TensorFlow, can be used for the machine learning.

"Learning information" is not limited to those obtained through machine learning. The learning information may be a table indicating a correspondence between an input vector based on input information or the like and output information, for example. In this case, output information corresponding to a feature vector based on input information may be acquired from the table, or a vector that is close to a feature vector based on the input information may be generated using two or more input vectors in the table and parameters for weighting each input vector, and output information corresponding to the input vectors and parameters used in the generation may be used to acquire final output information. The learning information may be a function or the like representing a relationship between an input vector based on the input information or the like and information for generating output information, for example. In this case, for example, information corresponding to a feature vector based on input information may be obtained from a function, and the obtained information may be used to acquire output information.

"Outputting information" is a concept that encompasses display on a display screen, projection using a projector, printing by a printer, output of a sound, transmission to an external apparatus, accumulation in a recording medium, and delivery of a processing result to another processing apparatus or another program. Specifically, for example, this concept encompasses enabling information to be displayed on a webpage, transmission as an email or the like, and outputting information for printing.

"Accepting information" is a concept that encompasses accepting information input from an input device such as a keyboard, a mouse, or a touch panel, receiving information transmitted from another apparatus or the like via a wired or wireless communication line, and accepting information read from a recording medium such as an optical disk, a magnetic disk, or a semiconductor memory

### Embodiment

In this embodiment, an estimation model generating apparatus acquires basin data of a basin of a river of interest from an image containing the basin, and acquires one or more candidate models for estimating the flow rate of the river based on the basin data. The estimation model generating apparatus verifies validity of at least one candidate model out of the one or more candidate models using verification data, and acquires one candidate model as an estimation model based on a verification result. The candidate model is verified, for example, based on information on the flow rate obtained using the candidate model, and information obtained by applying a value of a parameter corresponding to the basin data to one or more predetermined formulas regarding the flow rate of a river. It is preferable that the one or more formulas include at least one of a uniform flow formula and a rational formula and that the verification is preformed using both information obtained from the uniform flow formula and information obtained from the rational formula.

Furthermore, the estimation model generating apparatus may be used in a river flow rate estimating apparatus. It is sufficient that the river flow rate estimating apparatus is configured to acquire flow rate information on the flow rate of the river using the generated estimation model, and output the flow rate information. For example, the river flow rate estimating apparatus acquires weather data of the basin, and acquires information on the flow rate of the river by applying the weather data to the estimation model. In this case, the river flow rate estimating apparatus may acquire, through calculation, the specific flow rate of each pre-divided area from output results of the estimation model, or may acquire information on the recharge according to the relative recharge amount of each area as determined from the specific flow rate. Hereinafter, an example of the thus configured estimation model generating apparatus and river flow rate estimating apparatus will be described.

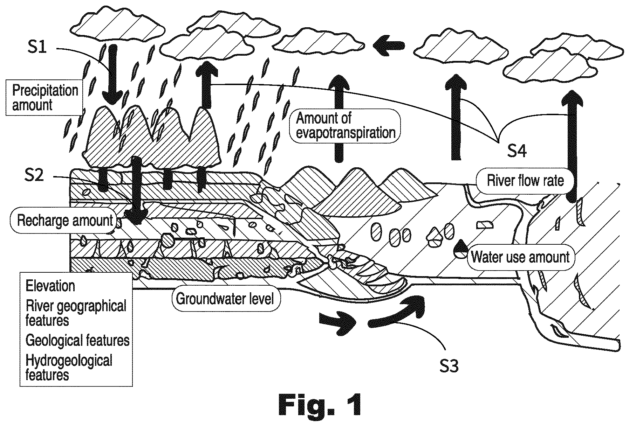

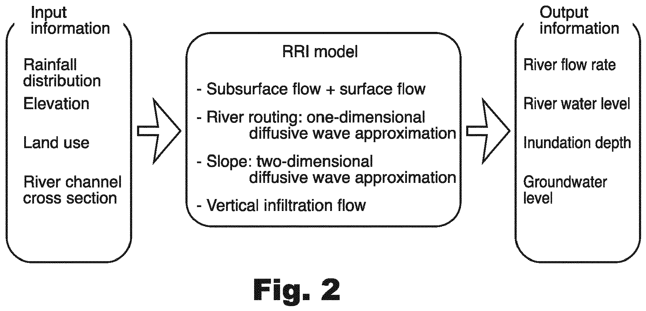

FIG. 1 is a diagram illustrating the application of the river flow rate estimating apparatus according to this embodiment. FIG. 2 is a diagram illustrating an example of an estimation model that is used in the river flow rate estimating apparatus in the embodiment.

FIG. 1 shows a general water cycle using one basin as an example. That is to say, in nature, water cycles through precipitation from the air (S1), recharge to the ground (S2), discharge of groundwater to rivers and oceans (S3), evaporation from the ground surface, oceans, and the like (S4), and then precipitation from the air (S1). For each phase, for example, the recharge amount (the amount of water supplied from the ground surface to the groundwater surface), the groundwater level, the river flow rate, the water use charge associated with human activities, the amount of evapotranspiration, and the like can be values representing the status of the water cycle.

In this embodiment, the river flow rate estimating apparatus is configured to, for example, estimate information on the river flow rate using an estimation model, and output the information. The estimation model is information for estimating the flow rate of a river and the like based on information on the basin of the river. The estimation model is a distributed model in which the basin is divided into unit areas. Such an estimation model is generated by the estimation model generating apparatus.

In this embodiment, the estimation model is configured using a parameter group including two or more parameters. The estimation model can estimate information on the flow rate of the river in the basin by setting the values of the parameters for each unit area of the model.

The unit areas may be areas called meshes that constitute the model, or may be areas that have been divided in some other ways. A unit area may be said to be a pre-divided area. For example, an area of a predetermined size identified by latitude and longitude may be set as a unit area. The parameters of the unit areas included in one basin may be set to the same value.

As shown in FIG. 2, in this embodiment, the estimation model is, for example, a known rainfall runoff inundation model (RRI model). That is to say, in this embodiment, the estimation processing can be easily performed by using the rainfall runoff inundation model as the estimation model.

That is to say, in this embodiment, the estimation model is configured to be able to analyze water flow such as rainfall-runoff and flood inundation in the basin based on information on geographical features, hydrogeological features, and the like set for each area or input data of weather data or the like. In this case, the information on geographical features of a unit area may refer to, for example, information such as an elevation, a gradient, or river geographical features (a river channel cross section, etc.). Also, the information on hydrogeological features or the like may refer to information on a roughness coefficient, a soil layer thickness, a saturated effective void ratio, a coefficient of permeability, a subsurface runoff coefficient, or the like, that is, information on land use. The weather data may refer to, for example, information on the precipitation amount (the rainfall distribution, etc.) as determined from the rainfall amount through radar analysis, rain gauges, or the like.

The estimation model generated in this embodiment is a model in which a constant group based on information on geographical features, hydrogeological features, and the like is set for parameters other than weather data such that the amount of water in each unit area can be specified by applying weather data. That is to say, the amount of water in each unit area can be specified by using the weather data and the estimation model in which a constant group is set. In this embodiment, the estimation model is configured to output information on the amount of water in the basin in response to application of information on the precipitation amount in each unit area, that is, the rainfall distribution, as the weather data. In other words, the output information of the estimation model is, for example, information on a river, such as a river flow rate or a river water level, or information on the amount of water, such as an inundation depth or a groundwater level. In this embodiment, use of the estimation model makes it possible to obtain the river flow rate and the river water level in the unit area that is a river and the inundation depth, the groundwater level, and the like in other unit areas, as information on the flow rate of the river.

The estimation model may be any other type of distributed model. A distributed model that can be an estimation model may be such that the state of the water cycle is modeled in a predetermined area that includes a forest, a river, and other types of land. In this case, the predefined area may be set, for example, in units of a factory or in units of a basin including a factory. That is to say, the predetermined area can be set in space units that each have a certain spatial extent.

The parameters are not limited to these, but various parameters are selected depending on the type of distributed model used as the estimation model. For example, those related to elements such as weather, a ground surface, a shallow layer, and a deep layer (e.g., precipitation, temperature, topsoil, sediments, permeable layer, etc.) and those related to site-specific properties can be set. More specifically, for example, parameters such as a precipitation amount, an amount of evapotranspiration, a temperature, a wind speed, a sunshine duration, a relative humidity, a crown cover, a plant canopy reservoir, a litter coverage, a litter storage, a snow cover-snow melt temperature, an albedo, a bulk transfer coefficient, a soil evaporation efficiency, a groundwater flow, an equivalent roughness coefficient, a groundwater flow, a hydraulic conductivity, an effective porosity, a solid-phase compressibility, a relative permeability, a capillary pressure, a fluid properties, a fluid density, an air density, a fluid viscosity coefficient, and an air viscosity coefficient are included.

Next, the configuration of the river flow rate estimating apparatus according to this embodiment will be described. In this embodiment, the river flow rate estimating apparatus is configured to function also as an estimation model generating apparatus that generates an estimation model. The river flow rate estimating apparatus can be said to have an estimation model generating apparatus. The river flow rate estimating apparatus and the estimation model generating apparatus may be configured as separate apparatuses that differ from each other in terms of hardware. In this case, it is sufficient that the river end estimating apparatus is configured to be able to acquire an estimation model generated by the estimation model generating apparatus. In this case, operations, instructions, or the like may be given by a user when acquiring the estimation model.

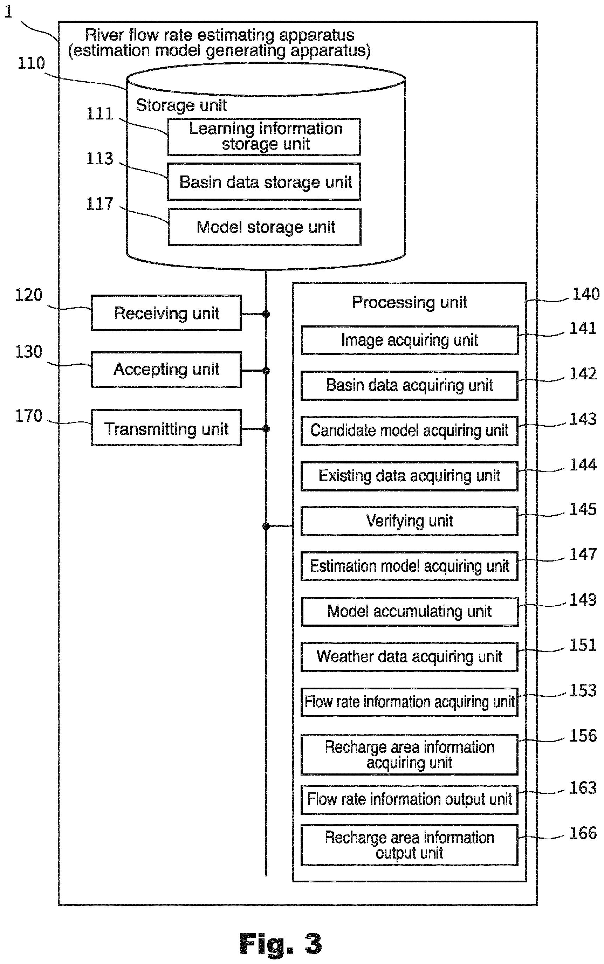

FIG. 3 is a block diagram of a river flow rate estimating apparatus 1 in the embodiment.

As shown in FIG. 3, the river flow rate estimating apparatus 1 includes a storage unit 110, a receiving unit 120, an accepting unit 130, a processing unit 140, and a transmitting unit 170. The river flow rate estimating apparatus 1 is, for example, a server apparatus.

In this embodiment, the user of the river flow rate estimating apparatus 1 can use the river flow rate estimating apparatus 1, by directly operating the river flow rate estimating apparatus 1 or by using an unshown terminal device or the like, for example. The terminal device may be, for example, any of portable information terminal device such as a so-called smartphone, a terminal device that is a personal computer (PC) such as a laptop computer, a tablet-type information terminal device, and the like.

The storage unit 110 includes a learning information storage unit 111, a basin data storage unit 113, and a model storage unit 117. The storage unit 110 is preferably a non-volatile recording medium, but may alternately be realized by a volatile recording medium. Although acquired information and the like are stored in the storage unit 110, there is no limitation on the procedure in which information or the like is stored. For example, information or the like may be stored via a recording medium, information or the like transmitted via a communication line or the like may be stored, or information or the like input via an input device may be stored.

Learning information acquired in advance is stored in the learning information storage unit 111. In this embodiment, the learning information is generated such that information that is input is an image containing the basin and information that is output is land use data for each portion of the image. The learning information is generated using a so-called machine learning method. The learning information is generated, for example, in an apparatus that is different from the river flow rate estimating apparatus 1, but may be generated by the processing unit 140 or the like and stored in the learning information storage unit 111.

In this case, an image taken as information that is input is an image acquired by an image acquiring unit 141 as described later. The image is an aerial photograph or a satellite photograph taken by a camera, but is not limited to this. For example, various forms of maps may be formed into images and used. In this embodiment, the image is an expression that can also include numerical data that can be configured as an image. For example, the image may be grid data that can be expressed as an image, such as a heat map.

The land use data is data for specifying what kind of land each portion of the basin contained in an image is. The land use data is, for example, data in which an identifier for specifying the application of a land is associated with an identifier for specifying each portion of the basin. A portion of the basin may be each unit area or a portion of the image indicated by one or more predetermined number of pixels. Alternatively, it may be a predetermined range divided in advance (e.g., an administrative division, a district, etc.). The application of a land is, for example, rice fields, other agricultural land, forests, wastelands, building sites, arterial traffic sites, lakes, rivers, residential areas, urban areas, or the like, but is not limited to these.

The learning information is, for example, generated using a machine learning method as follows. That is to say, the learning information is generated by giving information that is a combination of an image containing the basin whose application has been confirmed in advance by means of exploration or the like and land use data for specifying the application of each portion of the basin, to a module for configuring a classifier of machine learning. The generated learning information is accumulated in the learning information storage unit 111. As the machine learning method, for example, various methods such as deep learning such as convolutional neural networks (CNN), random forests, and SVR can be used. For example, functions in various machine learning frameworks and various existing libraries, such as fastText, tinySVM, random forest, and TensorFlow, can be used for the machine learning.

The learning information may be data in which a pixel in an image is associated with land use data that may correspond to that pixel. For example, the learning information may be data in which a specific pixel pattern that appears in an image is associated with land use data corresponding to that pixel pattern. In this case, a later-described basin data acquiring unit 142 can acquire land use data for each unit area in an image by specifying the corresponding land use data with reference to the learning information for that unit area.

Basin data regarding the basin is stored in the basin data storage unit 113. For example, basin data acquired by the basin data acquiring unit 142 is accumulated in the basin data storage unit 113, as described later. The basin data is stored, for example, in association with an identifier for identifying the basin. Basin data prepared in advance may be stored in the basin data storage unit 113.

In this embodiment, the basin data is, for example, land use data, information on geographical features, or information on hydrogeological features or the like.

An estimation model acquired by a later-described estimation model acquiring unit 147 is stored in the model storage unit 117. The estimation model is stored, for example, in association with an identifier for identifying the corresponding basin.

The receiving unit 120 is typically realized by a wireless or wired communication part, but may also be realized by a broadcast receiving part. The receiving unit 120 receives information transmitted from another apparatus. The receiving unit 120 stores the received information, for example, in the storage unit 110. In this embodiment, the user can, for example, input information using a terminal device and transmit it to the river flow rate estimating apparatus 1. The receiving unit 120 can store each piece of transmitted information in the storage unit 110.

The accepting unit 130 accepts information input using an unshown input part connected to the river flow rate estimating apparatus 1, and information input through an input operation performed using a reading device (e.g., a code reader) connected to the information processing apparatus 1 (including, for example, information read by the device). The accepted information is stored, for example, in the storage unit 110. The information that can be accepted by the accepting unit 130 may be input by any input part such as a numeric keypad, a keyboard, a mouse, or a menu screen. The accepting unit 130 may be realized by a device driver for an input part such as a numeric keypad or a keyboard, control software for a menu screen, or the like. The accepting unit 130 may also accept information such as voice input by a microphone, for example.

The accepting unit 130 may be regarded as accepting the information received by the receiving unit 120, as information input to the river flow rate estimating apparatus 1. That is to say, the input of information to the river flow rate estimating apparatus 1 may be interpreted to mean that the information is indirectly input by the user via a terminal device to the river flow rate estimating apparatus 1, or may be interpreted to mean that the information is directly input by the user using an input part to the river flow rate estimating apparatus 1. Also, the operation in which the user causes a program that automatically generates information to be executed or causes a program to function by giving various types of information, thereby giving information to the river flow rate estimating apparatus 1 may be regarded as input of the information to the river flow rate estimating apparatus 1.

The processing unit 140 may be realized typically by an MPU, a memory, or the like. Typically, the processing procedure of the processing unit 140 is realized by software, and the software is stored in a recording medium such as a ROM. Note that the procedure may be realized also by hardware (dedicated circuits). The processing unit 140 performs various types of processing. The various types of processing are, for example, processing that is performed by the units of the processing unit 140 as follows.

The processing unit 140 includes an image acquiring unit 141, a basin data acquiring unit 142, a candidate model acquiring unit 143, an existing data acquiring unit 144, a verifying unit 145, an estimation model acquiring unit 147, a model accumulating unit 149, a weather data acquiring unit 151, a flow rate information acquiring unit 153, a recharge area information acquiring unit 156, a flow rate information output unit 163, and a recharge area information output unit 166. The processing unit 140 performs various types of processing. The various types of processing are, for example, processing that is performed by the units of the processing unit 140 as follows.

The image acquiring unit 141 acquires an image containing the basin of a river for which an estimation model is to be generated (hereinafter, also referred to as a "target river"). The image containing the basin refers to images including an image containing a portion of the basin. In this embodiment, an image containing the basin is, for example, a satellite photograph, an aerial photograph, an image obtained by configuring an image of the basin based on information on the basin prepared in advance, or the like. The image obtained by configuring an image of the basin based on information on the basin prepared in advance is, for example, a map image configured based on numerical elevation model (DEM) data prepared in advance, in which different colors, densities, or the like are used for different elevations, but is not limited to this. The acquiring an image is a concept that may encompass acquiring an image accumulated in advance in the storage unit 110, acquiring an image from an external server, an image provision service, or the like, instructing a satellite or aircraft (which may be a drone, etc.) to capture an image of the basin and acquiring the image captured by the satellite or aircraft.

In this embodiment, the image acquiring unit 141 may be configured to acquire an image containing the basin of a target river, based on positional information indicating the basin. In this case, the positional information is information with which longitude and latitude can be specified, and is, for example, information indicating longitude and latitude or information indicating a place name associated with longitude and latitude or the like in advance. The image acquiring unit 141 acquires, for example, an image corresponding to positional information indicating the basin of a target river, out of images stored in the storage unit 110 in association with positional information in advance. The image acquiring unit 141 may be configured to transmit positional information indicating the basin of a target river to a satellite, an aircraft, or the like and instruct them to capture an image, and then acquire the captured image.

The basin data acquiring unit 142 acquires basin data regarding the basin of a target river. In this embodiment, the basin data acquiring unit 142 acquires basin data from an image containing the basin. For example, the basin data acquiring unit 142 acquires land use data of each unit area from an image, and acquires information on the hydrogeological features or the like of the unit area based on the land use data. In this case, the basin data acquiring unit 142 is configured to acquire basin data regarding each unit area, using an image, and learning information stored in the learning information storage unit 111. That is to say, for example, the basin data acquiring unit 142 applies acquired image to the learning information, and acquires land use data as output information. Then, the basin data acquiring unit refers to a table prepared in advance in which the application of the land is associated with information on hydrogeological features or the like, and acquires information on the hydrogeological features or the like of each unit area, based on the application of the land of the unit area.

The learning information may be configured such that information on hydrogeological features or the like is output information. In that case, the basin data acquiring unit 142 may acquire information on hydrogeological features or the like of each unit area, as output information that is obtained by applying an image to the learning information.

The basin data acquiring unit 142 may be configured to acquire information on the hydrogeological features or the like of each unit area, without using the learning information. For example, it is also possible that literature values related to geological features of the basin of a target river are prepared in advance, and information on hydrogeological features or the like of each unit area is acquired based on the literature values.

In this embodiment, the basin data acquiring unit 142 acquires information on the geographical features of each unit area of the basin. The basin data acquiring unit 142 may acquire information on the geographical features of each unit area, for example, by acquiring map information or the like configured in advance for the basin of a target river, from the storage unit 110 or the like. For example, it is also possible that so-called numerical elevation model (DEM) data is acquired, and information on each unit area is acquired based on the data.

The image acquiring unit 141 may acquire an map image configured based on numerical elevation model data, and the basin data acquiring unit 142 may acquire information on geographical features such as the elevation or the gradient of each unit area, using the map image. In this case, for example, it is also possible that a map image is applied to learning information configured to output information on the geographical features of each unit area in response to a map image as input information, generated in advance, thereby acquiring information on the geographical features of that unit area as output information.

The candidate model acquiring unit 143 acquires one or more candidate models for estimating information on the flow rate of a river, based on basin data. The candidate models are models that are candidates for an estimation model. In this embodiment, the candidate model are rainfall runoff inundation models.

In this case, one or more candidate models are acquired by applying a constant group of parameters out of the parameters for the numerical calculation model other than parameters related to weather data. In this embodiment, the candidate model acquiring unit 143 prepares several groups of constants to be set for the parameters of the rainfall runoff inundation model corresponding to the basin of a target river, and generates multiple candidate models with each constant group set for the parameters.

In this case, the constant values of the parameters set are, for example, information on the geographical features or information on the hydrogeological features or the like of a unit area. For example, a constant group related to a gradient, river geographical features (a movable cross section, etc.), a roughness coefficient, a soil layer thickness, a saturated effective void ratio, a coefficient of permeability, a subsurface runoff coefficient, or the like is set.

The candidate model acquiring unit 143 can prepare a constant group to be set for two or more candidate models, for example, as follows.

The candidate model acquiring unit 143 first sets the value of each parameter so as to correspond to basin data acquired by the basin data acquiring unit 142, thereby obtaining a set of constant group. That is to say, the candidate model acquiring unit 143 sets the value of each parameter so as to be a reasonable value in light of the basin data. For example, for parameters for which there is corresponding basin data, values corresponding to the basin data are set. Values obtained by performing a calculation using a predetermined calculation method based on the basin data may be set as the values of parameters.

Furthermore, the candidate model acquiring unit 143 changes the value of at least one parameter in a set of constant group, thereby obtaining a constant group (different constant group) for application to a different candidate model. In this embodiment, the candidate model acquiring unit 143 changes the value of at least one parameter set by the candidate model acquiring unit 143 by a predetermined rate, thereby obtaining a different constant group. Specifically, for example, the value of one parameter is increased or decreased by 1 percent, thereby obtaining a different constant group. The rate of change is not limited to this. It is also possible to obtain a different constant group by adding or subtracting a predetermined amount of change to or from a set value that is set in advance for each parameter.

The existing data acquiring unit 144 acquires information on the flow rate of a target river from a hydrological database. The hydrological database is, for example, database in which information on a past flow rate of a river is accumulated for each river. In this embodiment, for example, the hydrological database is stored in an external information processing apparatus that can be accessed by the river flow rate estimating apparatus. For example, the hydrological database is made available via the Internet. The hydrological database is not limited to this, and may be, for example, stored in the storage unit 110. The existing data acquiring unit 144 acquires information on the flow rate of a target river from a hydrological database, for example, using information for specify a target basin (e.g., an identifier such as the name of the target river, etc.) input by the user.

In this embodiment, for example, HydroATLAS (Linke et al., 2019) can be used as the hydrological database. This hydrological database is an organized set of existing data sets for basin and river hydrology with a resolution of 15 seconds. The original data used was from climate databases for the period 1950-2000. The hydrological database that can be used is not limited to this, and other databases such as those configured using observation data on the target river or the like may be used as appropriate.

In this embodiment, the existing data acquiring unit 144 is configured to acquire the lowest flow rate of a target river from a hydrological database. The information to be acquired is not limited to the lowest flow rate, and may be, for example, other information on the flow rate, such as the average flow rate of the target river.

The verifying unit 145 verifies the validity of at least one candidate model out of the one or more candidate models acquired by the candidate model acquiring unit 143, using verification data.

In this case, the verification data may correspond, for example, to one or more predetermined formulas (verification formulas) regarding the flow rate of a river, and values of parameters to be applied to the verification formulas and the candidate model. The verifying unit 145 can be said to verify the validity of at least one candidate model, using a verification formula, the candidate model, and values to be applied to parameters of the formula and parameters of the candidate model.

The verifying unit 145 uses weather data when performing the verification. The weather data may be based on actually measured values or may be tentatively set.

In this embodiment, the verifying unit 145 performs verification of a candidate model, using information on a flow rate obtained using the candidate model that is to be verified and information obtained by applying a value of a parameter corresponding to the basin data to the verification formula (verification using a verification formula). There is no limitation on the value of a parameter corresponding to the basin data, and examples thereof include a value contained in the basin data, a value acquired using a value contained in the basin data, a set of constant group prepared based on the basin data, and a value contained in a constant group different therefrom. For example, the verifying unit 145 applies the value of a parameter to be used, out of the constant group used in the acquisition of a candidate model that is to be verified, to the verification formula. The verifying unit 145 performs calculations for each of the candidate model and the verification formula by applying the same weather data to the candidate model and the verification formula. Then, information obtained from the candidate model and information obtained from the verification formula are compared with each other, and the validity of the candidate model is verified based on the comparison result. For example, if the information obtained from the candidate model and the information obtained from the verification formula are consistent with each other or if the states represented by these pieces of information are close to each other, the candidate model can be verified as highly valid. On the other hand, if the information obtained from the candidate model and the information obtained from the verification formula are different from each other, the validity of the candidate model can be said to be not high.

In this embodiment, a uniform flow formula representing a relationship between the water level and the flow rate (e.g., the so-called Manning formula) and a rational formula representing the peak flow rate are used as the one or more predetermined verification formulas. That is to say, in this embodiment, the verifying unit 145 performs verification of the candidate model, using information on a flow rate obtained using the candidate model that is to be verified, information obtained by applying a value of a parameter corresponding to the basin data to the uniform flow formula, and information obtained by applying a value of a parameter corresponding to the basin data to the rational formula. At least one of the uniform flow formula and the rational formula may be used as the verification formula. The uniform flow formula can be said to represent the average flow velocity.

Verification using the uniform flow formula and the rational formula can be performed, for example, as follows.

The verifying unit 145 obtains a relationship between the flow rate and the water depth in one or more unit areas that are a river, using the uniform flow formula. The verifying unit 145 obtains a relationship between the flow rate obtained from the candidate model and the water depth. It is then determined whether or not the correlation therebetween satisfies an evaluation condition. For example, the verifying unit 145 determines whether or not their correlation coefficient is greater than or equal to a predetermined value (an example of the evaluation condition).

Meanwhile, the verifying unit 145 obtains the peak flow rate of the target river, using the rational formula. The verifying unit 145 obtains the largest value of the flow rate of water in each unit area, using the candidate model. Then, the values are compared with each other, and it is determined whether or not the result satisfies an evaluation condition. For example, the verifying unit 145 determines whether or not the difference between the peak flow rate obtained from the rational formula and the highest flow rate obtained from the candidate model is smaller than a predetermined value (an example of the evaluation condition) or whether or not the difference is within a predetermined error range (an example of the evaluation condition).

Furthermore, in this embodiment, the verifying unit 145 performs verification using information acquired by the existing data acquiring unit 144, in addition to the above-described verification using the verification formula. That is to say, the verifying unit 145 performs verification of the candidate model, using at least information acquired by the existing data acquiring unit 144 and information on a flow rate obtained using the candidate model that is to be verified (verification using existing data). More specifically, for example, the verifying unit 145 performs verification of the candidate model, using the base flow rate obtained using the candidate model that is to be verified and the lowest flow rate of the target river acquired by the existing data acquiring unit 144. The information acquired by the existing data acquiring unit 144 may be said to be verification data.

Such verification using the existing data can be performed, for example, by obtaining, as a base flow rate, the flow rate of a target river obtained using the candidate model that is to be verified, under the assumption that there is no rainfall for a certain period of time, comparing the base flow rate with the lowest flow rate acquired from a hydrological database, and determining whether or not a result of the comparison satisfies an evaluation condition. For example, the evaluation condition is that the orders of magnitude of the base flow rate and the lowest flow rate acquired from the hydrological database is within a predetermined range. In addition to such an evaluation condition regarding the orders of magnitude, the evaluation condition may be that the difference between the base flow rate and the lowest flow rate is smaller than a predetermined value or within a predetermined error range.

In this embodiment, the verifying unit 145 evaluates the validity of the candidate model based on a determination result using the uniform flow formula and a determination result using the rational formula as described above. That is to say, the verifying unit 145 evaluates the validity of the candidate model by performing verification using the verification formulas. For example, the candidate model can be evaluated as valid, if both the determination result using the uniform flow formula and the determination result using the rational formula indicate that the validity of the candidate model is high. It is also possible that the candidate model is evaluated as valid, if any of the determination results indicates that the validity of the candidate model is high.

Furthermore, the verifying unit 145 evaluates the validity of the candidate model based on a determination result using information acquired by the existing data acquiring unit 144. That is to say, the verifying unit 145 evaluates the validity of the candidate model by performing verification using the existing data. For example, the candidate model can be evaluated as valid, if it is determined that a comparison result between the base flow rate and the lowest flow rate acquired from a hydrological database satisfies an evaluation condition.

In this embodiment, the verifying unit 145 is configured to, for example, perform verification using the existing data on candidate models evaluated as valid through the verification using the verification formula. In this case, the verifying unit 145 may perform verification using the existing data on a candidate model evaluated as most valid, or may perform verification using the existing data on each of candidate models evaluated as having a certain level of validity. For example, the verifying unit 145 may perform verification using the existing data on candidate models determined by the estimation model acquiring unit 147 as satisfying a first acquisition condition or as satisfying a second acquisition condition as described later. The verifying unit 145 is configured to evaluate a candidate model evaluated as valid through the verification using the existing data, as most valid. The verification method is not limited to this. For example, it is also possible that the verification using the verification formula and the verification using the existing data are both performed on all candidate models, and whether or not each candidate model is valid is evaluated by synthesizing the results of the validation. It is also possible that the verification using the existing data is performed on each candidate model, and the verification using the verification formula is performed on a candidate model evaluated as valid. Although it is possible to evaluate whether or not a candidate model is valid through either the verification using the verification formula or the verification using the existing data, if both the verification using the verification formula and the verification using the existing data are performed, it is possible to more properly evaluate whether or not a candidate model is valid. Thus, if both the verification using the verification formula and the verification using the existing data are performed, it is possible to acquire a candidate model that can more accurately estimate the flow rate of a river.

The estimation model acquiring unit 147 acquires one candidate model out of the one or more candidate models as an estimation model based on a verification result from the verifying unit 145. In this embodiment, the estimation model acquiring unit 147 acquires, as the estimation model, a candidate model evaluated as more valid as a result of the verifying unit 145 evaluating the validity of each of two or more candidate models.

For example, the estimation model acquiring unit 147 specifies a candidate model that, among candidate models that satisfy a condition that both a verification result obtained from the uniform flow formula and a verification result obtained from the rational formula satisfy a predetermined level (a first acquisition condition), satisfies a condition that the verification result (e.g., a correlation coefficient, etc.) obtained from the uniform flow formula indicates the highest validity (a second acquisition condition). The estimation model acquiring unit 147 can acquire, as the estimation model, a candidate model that satisfies the second acquisition condition, the candidate model satisfying a condition that the candidate model is evaluated as valid through the verification using the existing data (a third acquisition condition). In this case, the second acquisition condition may be that a verification result obtained from the rational formula indicates the highest validity (the difference between the highest flow rate and the peak flow rate obtained from the rational formula is the smallest). For example, the estimation model acquiring unit 147 may score the results of the evaluation of candidate models performed by the verifying unit 145, and acquire, as the estimation model, a candidate model that satisfies a condition that the score is the highest (another example of the acquisition condition).

The model accumulating unit 149 accumulates the estimation model acquired by the estimation model acquiring unit 147. The estimation model is accumulated in the model storage unit 117. The estimation model may be, for example, accumulated in association with an identifier for identifying a target river or the basin thereof.

In the river flow rate estimating apparatus 1, the units of the processing unit 140, the storage unit 110, the receiving unit 120, and the accepting unit 130 described above may be regarded as constituting an estimation model generating apparatus that generates an estimation model.

Furthermore, the river flow rate estimating apparatus 1 can acquire information on the flow rate of a target river (hereinafter, also referred to as "flow rate information") using a generated estimation model, using the units of the processing unit 140 described below.

The weather data acquiring unit 151 acquires weather data of the basin of a target river. For example, the rainfall distribution for the period corresponding to the period for which the flow rate is to be estimated is acquired as the weather. Weather data stored in advance in the storage unit 110 or the like in association with an identifier for specifying the basin may be acquired, or weather data may be acquired from an external server or the like. For example, precipitation amount data at an observation point close to the basin, which is accumulated in the "Global Satellite Mapping of Precipitation (GSMaP)", can be acquired as the weather data, but there is no limitation to this.

The flow rate information acquiring unit 153 acquires flow rate information of a target river, using the estimation model accumulated in the model accumulating unit 149. The flow rate information acquiring unit 153 acquires flow rate information of a target river by applying the acquired weather data to the estimation model corresponding to the target river. For example, the river flow rate in one unit area may be acquired as the flow rate information, but there is no limitation to this. For example, the river water level may be acquired. Also, information such as the groundwater level or the inundation depth at a predetermined point may be acquired as the flow rate information, as information that is not directly but indirectly related to the flow rate of the river. The flow rate information acquiring unit 153 may acquire, as the flow rate information, information such as the groundwater level or the inundation depth in addition to at least one of the river flow rate and the river water level.

The flow rate information output unit 163 in this embodiment outputs information by, for example, displaying the information on a display device provided in the river flow rate estimating apparatus 1. The flow rate information output unit 163 may be configured to output information, for example, by causing the transmitting unit 170 or the like to transmit the information to another apparatus via a network or the like. The flow rate information output unit 163 may be considered to include or not to include an output device such as a display screen or a speaker. The flow rate information output unit 163 may be realized by driver software for an output device, a combination of driver software for an output device and the output device, or the like.

In this embodiment, the flow rate information output unit 163 outputs the flow rate information acquired by the flow rate information acquiring unit 153. For example, the flow rate information output unit 163 outputs the flow rate information and information on the position corresponding to the flow rate information in association with each other such that they are displayed on a display screen in a predetermined format, or transmits them to a user's terminal device. Note that only the flow rate information may be output. For example, the output may be performed such that the flow rate information at each point in a river is displayed on a display screen or the like in a display mode corresponding to the flow rate information. Specifically, the display may be performed such that the higher the river flow rate or the higher the river water level, the higher (or lower) the saturation, density, brightness, or the like, or such that different colors are used according to the river flow rate or river water level. For example, the flow rate information at each point may be mapped and displayed on a map showing the basin or on an image including the basin. Accordingly, the flow rate information can be presented to the user in a visually comprehensible manner.

In this embodiment, in addition to or instead of the flow rate information, the specific flow rate in each unit area calculated using the flow rate information may be acquired and information on the specific flow rate may be output. For example, the flow rate information acquiring unit 153 acquires, through calculation, the specific flow rate of each pre-divided area in the basin, using a result output by using the estimation model. The information on the specific flow rate can be said to be flow rate information.

In this case, information on the recharge of the basin may be output. That is to say, the recharge area information acquiring unit 156 acquires information on a unit area that satisfies a predetermined recharge condition, using the specific flow rate of each area. The recharge area information output unit 166 outputs the acquired information, that is, the information on the recharge area. For example, a condition that the groundwater level is greater than a predetermined value, that the vertical infiltration flow is greater than or equal to a predetermined value, or the like can be set as the recharge condition. Accordingly, the relative recharge amount of each unit area as determined from the specific flow rate can be grasped. The recharge area information output unit 166 outputs, for example, a unit area that satisfies a recharge condition (a recharge area) in a display mode different from that of other areas, or displays the values of indicators related to recharge such as the groundwater level for the recharge area. This allows the user to easily grasp the dominant areas in the basin of a target river with respect to the water source recharge function, or to grasp the areas that require attention in comparison with other areas with respect to the water source recharge function. This will increase the possibility of effectively using the necessary effort when considering measures related to the water source recharge function of the basin of a target river. Information on groundwater recharge areas may be output based on the spatial distribution of the specific flow rate of each area.

The estimation model may be used to acquire the specific flow rate of each unit area based on two or more different sets of weather data. Also, a condition regarding the specific flow rate to be acquired corresponding to multiple sets of weather data may be set for each unit area as the recharge condition. For example, a condition that the average value of multiple specific flow rates corresponding to multiple sets of weather data is greater than or equal to a predetermined value, or the like may be set.

The transmitting unit 170 is typically realized by a wireless or wired communication part, but may also be realized by a broadcasting part. The transmitting unit 170 transmits information to another apparatus communicatively connected via a network to the river flow rate estimating apparatus 1. The transmitting unit 170 transmits information, for example, to a user-operable terminal device. In other words, for example, the transmitting unit 170 outputs information to a terminal device.

In the description above, the estimation model is not limited to simulation and numerical calculation models such as the rainfall runoff inundation model described above. For example, it may be learning information of machine learning (learning model, learned model). That is to say, training data constituted by a combination of weather data, flow rate information (e.g., measured values, etc.), land use data or information on hydrogeological features or the like, and information on geographical features, at a past point in time may be acquired by the basin data acquiring unit 142, and one or more pieces of learning information may be configured using a machine learning method and acquired as the candidate model by the candidate model acquiring unit 143. In this case, the verification data may be used to verify the validity of the candidate model, as past weather data and flow rate information, as with the training data.

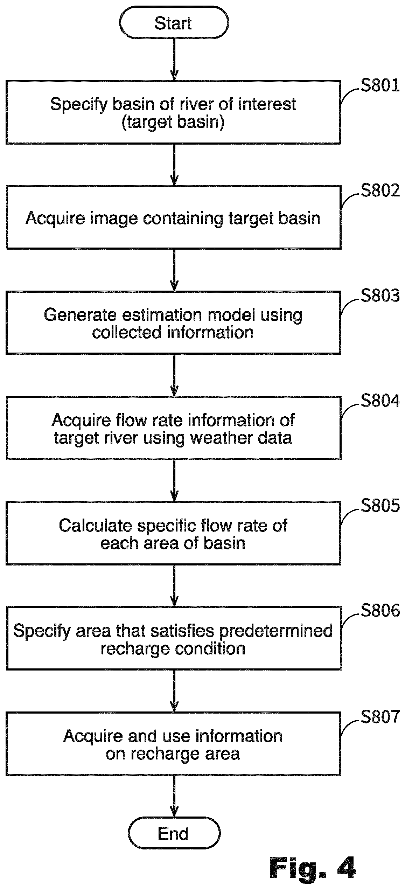

FIG. 4 is a flowchart illustrating the use of the river flow rate estimating apparatus 1 in the embodiment.

Users such as business operators can grasp flow rate information of a target river and information on the recharge based thereon, using the above-described river flow rate estimating apparatus 1. The river flow rate estimating apparatus 1 can be used, for example, in the following procedure. The description below is merely an example, and various variations are possible depending on the configuration and application of the river flow rate estimating apparatus 1.

(Step S801) First, the user determines the basin of a target river for which flow rate information is to be acquired. Specifically, for example, in the case of checking the flow rate of a river around a factory that uses water resources, the recharge area such as a mountain forest upstream of the factory, the area where the factory takes groundwater or river water downstream of the recharge area, and the area further downstream of the area may be selected as the target area. The user inputs information for specifying the target basin, to the river flow rate estimating apparatus 1. For example, positional information indicating the target basin is input, but there is no limitation to this. For example, an identifier such as the name of the target river may be input.

(Step S802) The image acquiring unit 141 acquires an image containing the target area. For example, the image acquiring unit 141 acquires an image to be used, based on positional information indicating the basin of the target river.

(Step S803) An estimation model is generated by the river flow rate estimating apparatus 1 and accumulated in the model storage unit 117. This makes it possible to use the estimation model to acquire flow rate information. The estimation model generation processing can be performed, for example, as described below.

(Step S804) The river flow rate estimating apparatus 1 acquires the assumed weather data and applies it to the estimation model. Accordingly, flow rate information of the target river is acquired.

(Step S805) The river flow rate estimating apparatus 1 calculates the specific flow rate of each unit area of the basin.

(Step S806) The river flow rate estimating apparatus 1 specifies an area that satisfies a predetermined recharge condition based on the specific flow rate.

(Step S807) The river flow rate estimating apparatus 1 outputs the information on the recharge area. This allows the user to perform activities using the output information on the recharge area.

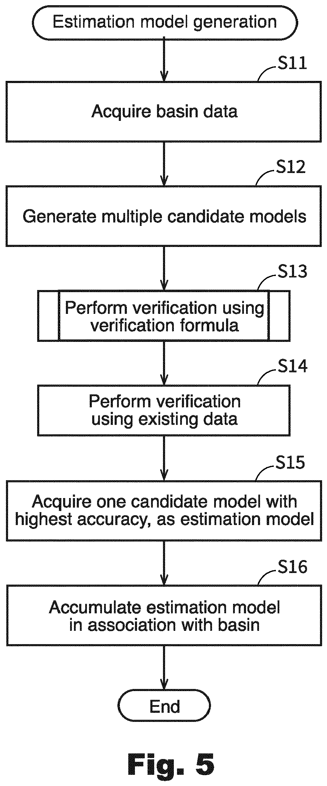

FIG. 5 is a flowchart showing an example of estimation model generation processing by the river flow rate estimating apparatus 1 in the embodiment.

(Step S11) The basin data acquiring unit 142 acquires basin data.

(Step S12) The candidate model acquiring unit 143 generates multiple candidate models. In this embodiment, as described above, multiple candidate models that are different from each other are generated respectively using different constant groups obtained by changing the value of a parameter.

(Step S13) The verifying unit 145 performs verification using a verification formula on the multiple candidate models. The procedure of the verification using a verification formula will be described later.

(Step S14) The verifying unit 145 performs verification using existing data on candidate models that are to be processed. The candidate models that are to be processed may be a candidate model with the highest accuracy in results of the evaluation in step S13, two or more candidate models with high accuracy in results of the evaluation in step S13, or all generated candidate models. If there is no candidate model determined as valid through the verification using the existing data among the candidate models that are to be processed, the procedure of the verifying unit 145 may return to step S12 or may be such that the candidate model with the next highest accuracy in results of the evaluation in step S13 is to be processed.

(Step S15) The estimation model acquiring unit 147 acquires one candidate model with the highest accuracy based on a verification result, as an estimation model.

(Step S16) The model accumulating unit 149 accumulates the acquired estimation model in the model storage unit 117 in association with the basin.

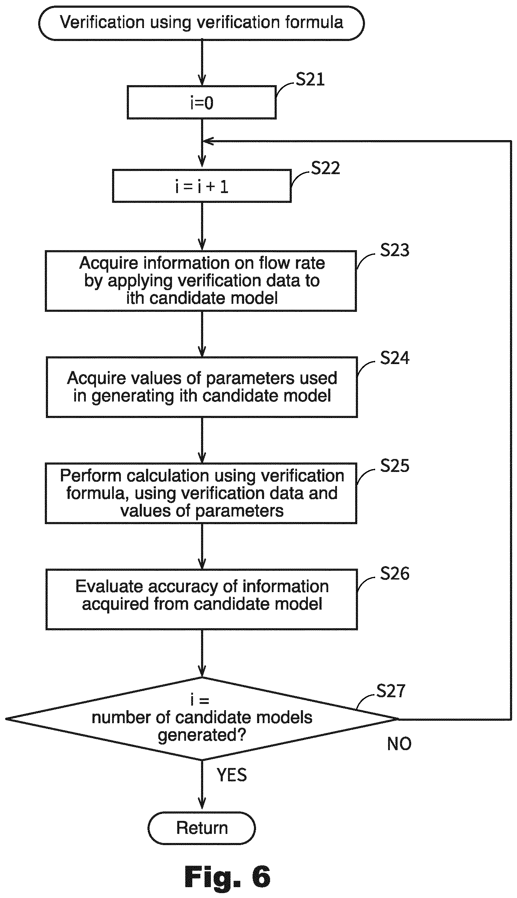

FIG. 6 is a flowchart showing an example of verification processing using a verification formula by the verifying unit 145 in the embodiment.

(Step S21) The verifying unit 145 sets a counter i to zero.

(Step S22) The verifying unit 145 increments the counter i.

(Step S23) The verifying unit 145 applies weather data that is verification data, to an i^{th} candidate model that is to be verified. Accordingly, flow rate information is acquired.

(Step S24) The verifying unit 145 acquires a constant group used in the generation of the i^{th} candidate model.

(Step S25) The verifying unit 145 performs calculation using a verification formula, using the constant group, and the verification formula and the weather data that are verification data.

(Step S26) The verifying unit 145 evaluates the accuracy of the information acquired from the candidate model based on the flow rate information acquired from the candidate model and the calculation result from the verification formula. For example, a correlation coefficient is acquired, or a difference between flow rate information and a calculation result for a specific index is compared with a predetermined value.

(Step S27) The verifying unit 145 determines whether or not the counter i matches the total number of candidate models generated. If the counter i matches the total number, the verification is ended and the procedure returns to the flowchart shown in FIG. 5. If the counter i does not match the total number, the procedure returns to step S22.

The verification can be performed, for example, as follows.

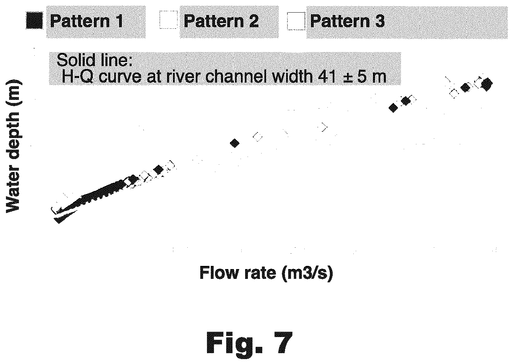

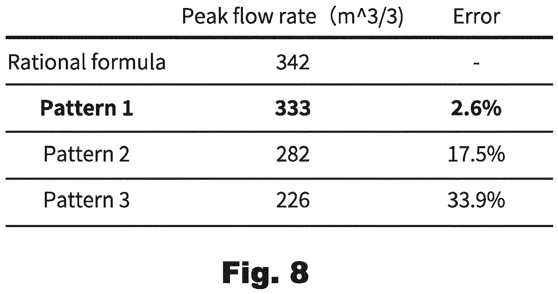

FIG. 7 is a first diagram illustrating verification using the verification formula performed by the verifying unit 145 in the embodiment. FIG. 8 is a second diagram illustrating verification using the verification formula performed by the verifying unit 145 in the embodiment.

In the examples shown in FIGS. 7 and 8, three estimation models "pattern 1", "pattern 2", and "pattern 3" respectively using different constant groups are verified using two types of verification formulas, namely a uniform flow formula and a rational formula.

FIG. 7 is a graph showing a relationship between the flow rate information at a predetermined point obtained from the three estimation models and the Height-Quantity curve (H-Q curve) represented by the flow rate formula at the same point. The graph shows that the flow rate information from "pattern 1" most closely matches the curve represented by the flow rate formula.

FIG. 8 shows the peak flow rates of the three estimation models and the rational formula in the case in which predetermined weather data is used. The error between the peak flow rate obtained from the estimation model for "pattern 1" among the three estimation models and the peak flow rate obtained from the rational formula is the smallest.

In such a case, it can be seen that "pattern 1" is the most accurate candidate model. Therefore, the estimation model acquiring unit 147 acquires "pattern 1" as the estimation model, in the case in which "pattern 1" is evaluated as valid through the verification using the existing data.

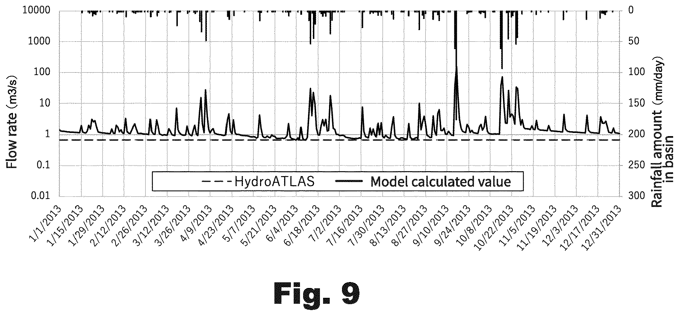

FIG. 9 is a diagram illustrating verification using the existing data performed by the verifying unit 145 in the embodiment.

In FIG. 9, the left vertical axis indicates the flow rate on the logarithmic axis, and the horizontal axis indicates the date. FIG. 9 shows the transition of the estimated value of the flow rate of a target river, as calculated using one candidate model. Also, using the same axis, the value of the base flow rate of the target river, as acquired from a hydrological database (in this case, HydroATLAS), is indicated by the broken line. In FIG. 9, the daily rainfall amount (basin rainfall amount) in the basin having the target river is indicated on the right vertical axis. The transition of the estimated value of the flow rate is calculated based on the basin rainfall amount.

It can be seen from FIG. 9 that the smallest estimated value of the flow rate of the target river and the base flow rate obtained from the hydrological database are of substantially the same order of magnitude. In such a case, the verifying unit 145 can determine that this candidate model is highly valid. Therefore, if the candidate model is determined as valid through the verification using the verification formula, the estimation model acquiring unit 147 acquires this candidate model as the estimation model.

In this embodiment, an estimation model that is a distributed model can be verified using a uniform flow formula and a rational formula that are independent verification formulas with different infiltration processes. According to the uniform flow formula, an H-Q curve that approximates the formula based on the values actually measured on the site can be obtained, but the problem is that the uniform flow formula cannot calculate the flow rate of a river. According to the rational formula, parameters consistent with flood runoff amount can be extracted, but the problem is that only data from one point can be obtained. On the other hand, the estimation model can calculate continuous river flow rate. In the estimation model, the issue is to ensure accuracy since all values are estimated values. However, since the estimation model that has been verified to be accurate by these validation formulas can be used, it is possible to obtain flow rate information with a certain degree of reliability.

As explained above, according to this embodiment, it is possible to acquire an estimation model that is useful to estimate information on the flow rate of a target river. The estimation model can then be used to acquire information on the flow rate of a target river. Since the estimation model is acquired based on a verification result using verification data, it is possible to acquire more accurate flow rate information. The estimation model can be generated using an image containing the basin. Therefore, it is not necessary to perform field survey such as exploration on the site for configuring an estimation model, and even if it is necessary, the amount of work can be reduced. Therefore, even if the target river is at a remote location or the like, it is possible to easily and quickly estimate the flow rate information.

In this embodiment, it is possible to acquire information on recharge areas based on specific flow rate analysis after acquiring flow rate information without necessarily visiting the site in the basin of a target river. Therefore, it is possible to easily specify areas that require attention with respect to the recharge in the basin of each target river, and to efficiently engage in water source maintenance activities and water resource utilization to enhance sustainability.

In this embodiment, both verification using the verification formula and verification using the existing data are performed on candidate models. Thus, it is possible to acquire a candidate model that can more accurately estimate the flow rate of a river.

The candidate models may be generated and verified one at a time. In this case, the acquisition and verification of a candidate model may be repeated until a predetermined condition is satisfied. Hereinafter, estimation model generation processing in the case in which candidate models are generated and verified one at a time will be described.

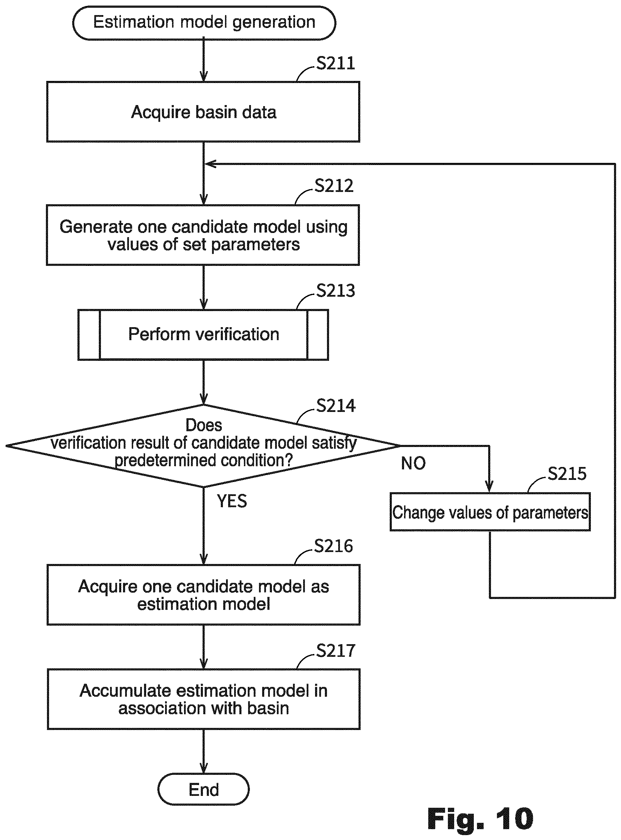

FIG. 10 is a flowchart showing a modified example of the estimation model generation processing by the river flow rate estimating apparatus 1 in the embodiment.

(Step S211) The basin data acquiring unit 142 acquires basin data.

(Step S212) The candidate model acquiring unit 143 generates one candidate model. In this modified example, one candidate model is generated using a constant group of set parameters.

(Step S213) The verifying unit 145 performs verification of the generated one candidate model. The verification will be described later.

(Step S214) The estimation model acquiring unit 147 determines whether or not the candidate model satisfies a predetermined condition, based on a verification result. If the candidate model satisfies a predetermined condition, the procedure advances to step S216, or otherwise the procedure advances to step S215. Satisfying a predetermined condition may be, for example, that a verification result is obtained to the effect that the candidate model has a certain level of validity (e.g., an indicator representing the accuracy of the candidate model is higher than a predetermined value, etc.) based on the verification result.

(Step S215) The estimation model acquiring unit 147 changes the constant group of parameters to different values. The estimation model acquiring unit 147 sets the constant group such that its content is not the same as that of the previously set constant groups. Subsequently, the procedure returns to step S212. Accordingly, the generation and verification of a candidate model are performed using the different groups of constants that have been changed.

(Step S216) The estimation model acquiring unit 147 acquires one candidate model determined as satisfying the predetermined condition, as an estimation model.

(Step S217) The model accumulating unit 149 accumulates the acquired estimation model in the model storage unit 117 in association with the basin.

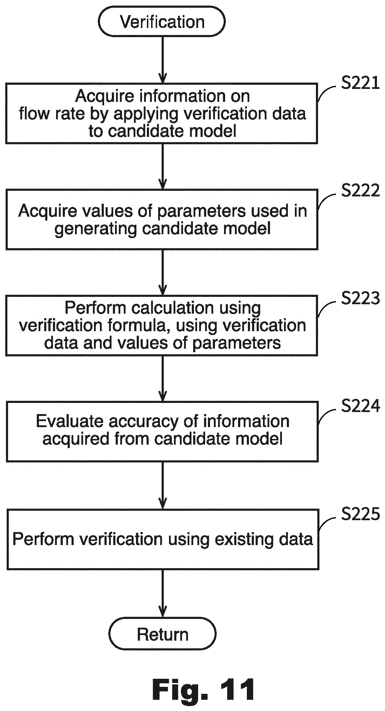

FIG. 11 is a flowchart showing an example of verification processing by the verifying unit 145 in the embodiment.

(Step S221) The verifying unit 145 applies weather data that is verification data, to a candidate model. Accordingly, flow rate information is acquired.

(Step S222) The verifying unit 145 acquires a constant group used in the generation of the candidate model.

(Step S223) The verifying unit 145 performs calculation using a verification formula, using the constant group, and the verification formula and the weather data that are verification data.

(Step S224) The verifying unit 145 evaluates the accuracy of the information acquired from the candidate model based on the flow rate information acquired from the candidate model and the calculation result from the verification formula.

(Step S225) The verifying unit 145 performs verification using existing data on the candidate model. Subsequently, the procedure returns to the flowchart shown in FIG. 10.

In this manner, the modified example is configured such that acquisition of one candidate model by the candidate model acquiring unit 143 and verification regarding the one candidate model by the verifying unit 145 are repeated until the estimation model acquiring unit 147 determines that a verification result satisfies a predetermined condition. In this modified example as well, the same effects as those in the foregoing embodiment can be obtained. If candidate models are generated and verified one at a time as in this modified example, a candidate model with relatively high validity can be relatively quickly acquired as an estimated model.

It is also possible that verification using the verification formula is performed in step S213 described above, and, if the candidate model satisfies a predetermined condition in step S214, verification using the existing data is performed before the procedure advances to step S216. In this case, if the candidate model is determined as valid through the verification using the existing data, the procedure may advance to step S216, or otherwise the procedure may return to step S212.

It is also possible that acquisition of two or more candidate models by the candidate model acquiring unit 143 and verification regarding the two or more candidate models by the verifying unit 145 are repeated until the estimation model acquiring unit 147 determines that a verification result satisfies a predetermined condition.

The processing in this embodiment may be realized by software. The software may be distributed by software downloads or the like. Furthermore, the software may be distributed in a form where the software is stored in a recording medium such as a CD-ROM. The software that realizes the river flow rate estimating apparatus 1 in this embodiment is the following sort of program. Specifically, this program is a program that is executed on a computer of the river flow rate estimating apparatus 1, the program causing the computer of the river flow rate estimating apparatus 1 to function as: a flow rate information acquiring unit that acquires information on a flow rate of a river of interest, using an estimation model accumulated by the estimation model generating apparatus; and a flow rate information output unit that outputs the information on the flow rate.

Furthermore, the software that realizes the estimation model generation processing of the river flow rate estimating apparatus 1 in this embodiment is the following sort of program. Specifically, this program is a program that is executed on a computer of the river flow rate estimating apparatus 1, the program causing the computer of the river flow rate estimating apparatus 1 to function as: a basin data acquiring unit that acquires basin data of a basin of a river of interest from an image containing the basin; a candidate model acquiring unit that acquires one or more candidate models for estimating information on a flow rate of the river based on the basin data; a verifying unit that verifies validity of at least one candidate model out of the one or more candidate models using verification data; an estimation model acquiring unit that acquires one candidate model out of the one or more candidate models as an estimation model based on a verification result; and a model accumulating unit that accumulates the acquired estimation model.

### (Others)

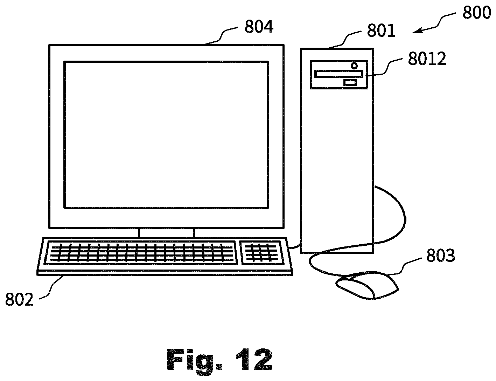

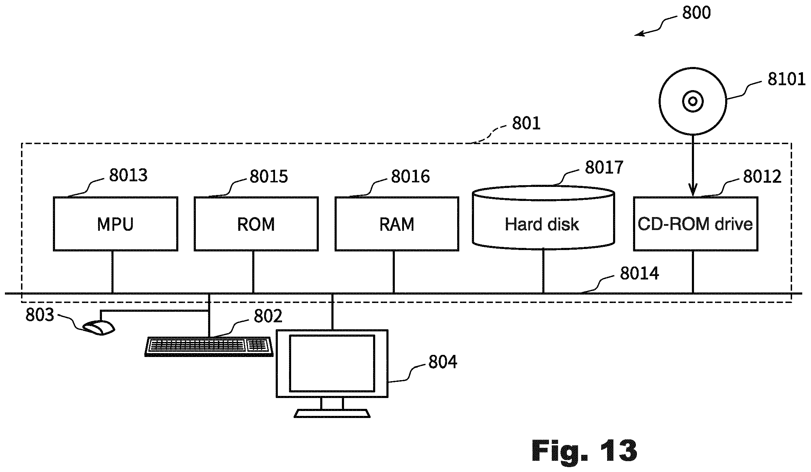

FIG. 12 is a schematic view of a computer system 800 in the foregoing embodiment. FIG. 13 is a block diagram of the computer system 800 in the embodiment.

These drawings show the configuration of a computer that executes the programs described in this specification to realize the river flow rate estimating apparatus and the like in the foregoing embodiment. The foregoing embodiment may be realized using computer hardware and a computer program executed thereon.

The computer system 800 includes a computer 801 including a CD-ROM drive, a keyboard 802, a mouse 803, and a monitor 804.

The computer 801 includes, in addition to the CD-ROM drive 8012, an MPU 8013, a bus 8014 connected to the CD-ROM drive 8012 and the like, a ROM 8015 in which a program such as a boot up program is stored, a RAM 8016 that is connected to the MPU 8013 and is a memory in which a command of an application program is temporarily stored and a temporary storage area is provided, and a hard disk 8017 in which an application program, a system program, and data are stored. Although not shown, the computer 801 may further include a network card that provides connection to a LAN.

Each program for causing the computer system 800 to execute the functions of the information processing apparatus and the like in the foregoing embodiment may be stored in a CD-ROM 8101 that is inserted into the CD-ROM drive 8012, and be transmitted to the hard disk 8017. Alternatively, the program may be transmitted via a network (not shown) to the computer 801 and stored in the hard disk 8017. At the time of execution, the program is loaded into the RAM 8016. The program may be loaded from the CD-ROM 8101, or may be loaded directly from a network.

The program does not necessarily have to include, for example, an operating system (OS) or a third party program to cause the computer 801 to execute the functions of the information processing apparatus and the like in the foregoing embodiment. The program may only include a command portion to call an appropriate function (module) in a controlled mode and obtain desired results. The manner in which the computer system 800 operates is well known, and thus a detailed description thereof has been omitted.

It should be noted that, in the program, in a transmitting step of transmitting information, a receiving step of receiving information, or the like, processing that is performed only by hardware such as processing that is performed by a modem or an interface card in the transmitting step (processing that can be performed only by hardware) is not included.

Furthermore, the computer that executes the program may constituted by a single computer, or constituted by multiple computers. That is to say, centralized processing may be performed, or distributed processing may be performed.

Furthermore, in the foregoing embodiment, two or more constituent elements in one apparatus may be physically realized by one medium.

In the foregoing embodiment, each process (function) may be realized as centralized processing using a single apparatus (system), or may be realized as distributed processing using multiple apparatuses (in this case, the entire system constituted by multiple apparatuses that perform distributed processing may be regarded as one "apparatus").

Furthermore, in the foregoing embodiment, information transmission performed between constituent elements may be such that, for example, if two constituent elements for transmitting information are physically different from each other, the transmission is performed by one of the constituent elements outputting the information and the other constituent element accepting the information, or alternatively, if two constituent elements for transmitting information are physically the same, the transmission is performed by shifting from a processing phase corresponding to one of the constituent elements to a processing phase corresponding to the other constituent element.

Furthermore, in the foregoing embodiment, information related to the processing that is performed by each constituent element, for example, information that is to be accepted, acquired, selected, generated, transmitted, or received by each constituent element, information such as a threshold value, a numerical expression, or an address used by each constituent element in the processing and the like may be retained in an unshown recording medium temporarily or for a long period of time even if not specified in the description above. Furthermore, the information may be accumulated in the unshown recording medium by each constituent element or by an unshown accumulating unit. Furthermore, the information may be read from the unshown recording medium by each constituent element or by an unshown reading unit.

Furthermore, in the foregoing embodiment, if information used by each constituent element or the like, for example, information such as a threshold value, an address, or various setting values used by each constituent element in the processing may be changed by a user, the user may be or may not be allowed to change such information as appropriate even if not specified in the description above. If the user is allowed to change such information, the change may be realized by, for example, an unshown accepting unit that accepts a change instruction from the user and an unshown changing unit that changes information according to the change instruction. The unshown accepting unit may accept the change instruction, for example, by accepting information from an input device, by receiving information transmitted via a communication line, or by accepting information read from a predetermined recording medium.

The present invention is not limited to the embodiment set forth herein. Various modifications are possible within the scope of the invention. Some of the constituent elements or the functions may be omitted in the foregoing embodiment.

In the foregoing embodiment, the verifying unit performs both verification using the verification formula and verification using the existing data, but there is no limitation to this. For example, it is also possible that only verification using the verification formula is performed and verification using the existing data is not performed. In this case, information may not be acquired from a hydrological database, and the existing data acquiring unit may not be provided. It is also possible that only verification using the existing data is performed and verification using the verification formula is not performed.

### Industrial Applicability

As described above, the river flow rate estimating apparatus according to the present invention has the effect of making it possible to estimate information on the flow rate of a target river, thus rendering this apparatus useful as a river flow rate estimating apparatus and the like.

### List of Reference Numerals

1 River flow rate estimating apparatus (estimation model generating apparatus)
- 110: Storage unit
- 111: Learning information storage unit
- 113: Basin data storage unit
- 117: Model storage unit
- 120: Receiving unit
- 130: Accepting unit
- 140: Processing unit
- 141: Image acquiring unit
- 142: Basin data acquiring unit
- 143: Candidate model acquiring unit
- 144: Existing data acquiring unit
- 145: Verifying unit
- 147: Estimation model acquiring unit
- 149: Model accumulating unit
- 151: Weather data acquiring unit
- 153: Flow rate information acquiring unit
- 156: Recharge area information acquiring unit
- 163: Flow rate information output unit
- 166: Recharge area information output unit
- 170: Transmitting unit

## Claims

1. An estimation model generating apparatus comprising:
a basin data acquiring unit that acquires basin data of a basin of a river of interest from an image containing the basin;
a candidate model acquiring unit that acquires one or more candidate models for estimating information on a flow rate of the river based on the basin data;
a verifying unit that verifies validity of at least one candidate model out of the one or more candidate models using verification data;
an estimation model acquiring unit that acquires one candidate model out of the one or more candidate models as an estimation model based on a verification result; and
a model accumulating unit that accumulates the acquired estimation model.

2. The estimation model generating apparatus according to claim 1, wherein the verifying unit performs verification of the candidate model, using information on a flow rate obtained using the candidate model that is to be verified, and information obtained by applying a value of a parameter corresponding to the basin data to one or more predetermined formulas regarding a flow rate of a river.

3. The estimation model generating apparatus according to claim 2, wherein the one or more predetermined formulas include at least one of a uniform flow formula representing a relationship between a water level and a flow rate and a rational formula representing a peak flow rate.

4. The estimation model generating apparatus according to claim 3, wherein the verifying unit performs verification of the candidate model, using information on a flow rate obtained using the candidate model that is to be verified, information obtained by applying a value of a parameter corresponding to the basin data to the uniform flow formula, and information obtained by applying a value of a parameter corresponding to the basin data to the rational formula.

5. The estimation model generating apparatus according to any one of claims 1 to 4, further comprising an existing data acquiring unit that acquires information on a flow rate of the river from a hydrological database,
wherein the verifying unit performs verification of the candidate model, using at least information acquired by the existing data acquiring unit and information on a flow rate obtained using the candidate model that is to be verified.

6. The estimation model generating apparatus according to claim 5,
wherein the existing data acquiring unit acquires a lowest flow rate of the river from a hydrological database, and
the verifying unit performs verification of the candidate model, using a base flow rate obtained using the candidate model that is to be verified and the lowest flow rate acquired by the existing data acquiring unit.

7. The estimation model generating apparatus according to any one of claims 1 to 6, which is configured to repeat acquisition of one or more candidate models by the candidate model acquiring unit and verification regarding the one or more candidate models by the verifying unit, until the estimation model acquiring unit determines that a verification result satisfies a predetermined condition.

8. The estimation model generating apparatus according to any one of claims 1 to 7,
wherein the estimation model is a rainfall runoff inundation model, and
the basin data includes land use data.

9. The estimation model generating apparatus according to any one of claims 1 to 8, further comprising an image acquiring unit that acquires an image to be used, based on positional information indicating the basin of the river of interest,
wherein the basin data acquiring unit acquires basin data of the basin from the acquired image.

10. A river flow rate estimating apparatus comprising:
the estimation model generating apparatus according to any one of claims 1 to 9;
a flow rate information acquiring unit that acquires information on a flow rate of a river of interest, using the estimation model accumulated by the model accumulating unit; and
a flow rate information output unit that outputs the information on the flow rate.

11. The river flow rate estimating apparatus according to claim 10, further comprising a weather data acquiring unit that acquires weather data of the basin of the river of interest,
wherein the flow rate information acquiring unit acquires the information on the flow rate by applying the weather data to the estimation model.

12. The river flow rate estimating apparatus according to claim 10 or 11, wherein the flow rate information acquiring unit acquires, through calculation, a specific flow rate of each pre-divided area in the basin, using a result output by using the estimation model.

13. The river flow rate estimating apparatus according to claim 12, further comprising:
a recharge area information acquiring unit that acquires information on an area that satisfies a predetermined recharge condition, using the specific flow rate of each basin; and
a recharge area information output unit that outputs the information on the area.

14. A method for producing an estimation model, realized using a basin data acquiring unit, a candidate model acquiring unit, a verifying unit, an estimation model acquiring unit, a model accumulating unit, and a model storage unit in which an estimation model is stored, comprising:
a basin data acquiring step of the basin data acquiring unit acquiring basin data of a basin of a river of interest from an image containing the basin;
a candidate model acquiring step of the candidate model acquiring unit acquiring one or more candidate models for estimating information on a flow rate of the river based on the basin data;
a verifying step of the verifying unit verifying validity of at least one candidate model out of the one or more candidate models using verification data;
an estimation model acquiring step of the estimation model acquiring unit acquiring one candidate model out of the one or more candidate models as an estimation model based on a verification result; and
a model accumulating step of the model accumulating unit accumulating the acquired estimation model in the model storage unit.

15. A river flow rate estimating method realized using the estimation model generating apparatus according to any one of claims 1 to 9, a flow rate information acquiring unit, and a flow rate information output unit, comprising:
a flow rate information acquiring step of the flow rate information acquiring unit acquiring information on a flow rate of a river of interest, using the estimation model accumulated by the estimation model generating apparatus; and
a flow rate information output step of the flow rate information output unit outputting the information on the flow rate.

16. A program for causing a computer to function as:
a basin data acquiring unit that acquires basin data of a basin of a river of interest from an image containing the basin;
a candidate model acquiring unit that acquires one or more candidate models for estimating information on a flow rate of the river based on the basin data;
a verifying unit that verifies validity of at least one candidate model out of the one or more candidate models using verification data;
an estimation model acquiring unit that acquires one candidate model out of the one or more candidate models as an estimation model based on a verification result; and
a model accumulating unit that accumulates the acquired estimation model.

17. A program for causing a computer to function as:
a flow rate information acquiring unit that acquires information on a flow rate of a river of interest, using the estimation model accumulated by the estimation model generating apparatus according to any one of claims 1 to 9; and
a flow rate information output unit that outputs the information on the flow rate.
